# EUROPÄISCHE PATENTSCHRIFT

(11) **EP 3 791 998 B1**
(45) Veröffentlichungstag und Bekanntmachung des Hinweises auf die Patenterteilung: **18.03.2026**
(21) Anmeldenummer: 20185846.1
(22) Anmeldetag: 15.07.2020
(51) Int. Cl.: B23Q 17/09, B23P 11/02, B23Q 17/22, B25J 15/00

(54) **VORRICHTUNG ZUR, INSBESONDERE AUTOMATISIERTEN, BEREITSTELLUNG EINES KOMPLETTWERKZEUGS**
DEVICE FOR IN PARTICULAR AUTOMATED PROVISION OF A COMPLETE TOOL
DISPOSITIF DE FOURNITURE, EN PARTICULIER AUTOMATISÉE, D'UN OUTIL COMPLET

(30) Priorität: 11.09.2019 DE 102019124428
(43) Veröffentlichungstag der Anmeldung: 17.03.2021
(73) Patentinhaber: Franz Haimer Maschinenbau KG, 86568 Hollenbach-Igenhausen (DE)
(72) Erfinder: Stoffels, Olaf, 33415 Verl (DE)
(74) Vertreter: Schwarz, Wolfgang

(56) Entgegenhaltungen:
- WO-A1-03/106105
- WO-A1-2015/036428
- WO-A2-2018/069410
- DE-A1- 102005 004 166
- DE-A1- 102009 052 549
- US-A1- 2010 051 610

## Beschreibung

Vorrichtung zur, insbesondere automatisierten, Bereitstellung eines Komplettwerkzeugs Die Erfindung betrifft eine Vorrichtung zur, insbesondere automatisierten, Bereitstellung eines Komplettwerkzeugs nach dem Oberbegriff des Patentanspruchs 1, eine Anlage zur, insbesondere automatisierten, Bereitstellung eines Komplettwerkzeugs mit der Schrumpf- und Vermessungsstation nach Patentanspruch **12** sowie ein Verfahren zum Betreiben der Anlage nach Patentanspruch 14. Für Werkzeugmaschinen, die mit hohen Drehzahlen oder besonderen Präzisionserfordernissen arbeiten, insbesondere Bohr-, Fräs- oder Drehmaschinen, ist die Verwendung von Schrumpffuttern verbreitet, da diese mit besonders hoher Rundlaufgenauigkeit und besonders zuverlässiger Drehmomentübertragung zwischen Werkzeugaufnahme und Werkzeug arbeiten. Derartige Werkzeugaufnahmen weisen eine zentrale Aufnahmeöffnung auf, deren Durchmesser geringfügig kleiner ist als der Außendurchmesser des aufzunehmenden Werkzeugs. Zum Einsetzen des Werkzeugs in die Werkzeugaufnahme wird diese erhitzt, beispielsweise unter Verwendung einer induktiven Heizvorrichtung oder eines Heizgebläses, bis sich die Aufnahmeöffnung ausreichend aufgeweitet hat, um das Werkzeug einführen zu können. Beim Erkalten der Werkzeugaufnahme, gegebenenfalls unterstützt durch eine Kühlvorrichtung, schrumpft die Werkzeugaufnahme und klemmt das Werkzeug allseitig und zuverlässig ein. Zur Entnahme des Werkzeugs wird die Werkzeugaufnahme erneut erhitzt, bis das Werkzeug aus der Aufnahmeöffnung herausgezogen werden kann.

Des Weiteren ist es üblich, ein Komplettwerkzeug aus Werkzeugaufnahme und eingeschrumpftem Werkzeug vor der Kopplung mit einer, beispielsweise als CNC-Bearbeitungsmaschine ausgebildeten, Werkzeugmaschine mittels einer Vermessungseinrichtung bzw. Voreinstelleinrichtung zu vermessen und die ermittelten Maße zur Optimierung der Werkstückbearbeitung zu verwenden. Dabei werden insbesondere die Länge des Komplettwerkzeugs, der Durchmesser und die Schneidenform des eingespannten Werkzeugs gemessen. Eine derartige Vermessungseinrichtung weist regelmäßig eine mittels einer Antriebseinrichtung drehantreibbare Drehspindel mit einer Halteeinrichtung zur Halterung einer Werkzeugaufnahme bzw. eines Komplettwerkzeugs auf. Mittels der Drehspindel wird das Komplettwerkzeug dabei während der Vermessung axial gedreht.

Aus der DE 102 49 072 A1 ist ein Verfahren zum Befestigen eines Werkzeugs in einem Werkzeugfutter bekannt, bei dem zunächst eine Ist-Position des Werkzeugs, insbesondere in Richtung der Längsachse des Werkzeugs, durch Messung bestimmt wird. Anschließend wird das Werkzeug in das Werkzeugspannfutter eingeführt, dort auf der Grundlage der ermittelten Ist-Position positioniert und schließlich eingeschrumpft. Nach dem Einschrumpfen wird dann noch die Ist-Position des Werkzeugs im Werkzeugfutter bestimmt. Während des Einschrumpfvorgangs und der Bestimmung der Ist-Positionen des Werkzeugs ist das Werkzeugfutter hier dabei an einer um eine Drehachse drehbaren, CNC-gesteuerten Werkzeugaufnahmespindel gehaltert. Zudem erfolgen die Verbindung von Werkzeugaufnahme und Werkzeug und die Vermessung des Komplettwerkzeugs hier weitgehend automatisiert. Dabei werden die Werkzeugaufnahme und das Werkzeug mittels eines Werkzeugfutterwechslers und eines Werkzeuggreifers bewegt.

Bei einem derartigen Einschrumpfen und Vermessen an einer Drehspindel gibt es jedoch, insbesondere bei einer hohen Anzahl von Einschrumpf- und Vermessungsvorgängen in kurzer Zeit, einen relativ hohen Wärmeeintrag in die Drehspindel, was zu einer thermischen Ausdehnung der Drehspindel und somit zu einer Verringerung der Messgenauigkeit führt. Zudem ist die Verwendung eines Werkzeugfutterwechslers zur Bewegung der Werkzeugaufnahme und eines separaten Werkzeuggreifers zur Bewegung des Werkzeugs aufwendig.

Die US 2010/051610 A1 offenbart eine Vorrichtung, auf die der Oberbegriff des Anspruchs 1 basiert.

Aufgabe der Erfindung ist es, eine Vorrichtung zur, insbesondere automatisierten, Bereitstellung eines Komplettwerkzeugs aus Werkzeugaufnahme und Werkzeug zur Verfügung zu stellen, mit der Komplettwerkzeuge einfach und effektiv mit hoher Wiederholgenauigkeit bereitgestellt werden. Eine weitere Aufgabe der Erfindung ist es, eine Vorrichtung zur, insbesondere automatisierten, Bereitstellung eines Komplettwerkzeugs aus Werkzeugaufnahme und Werkzeug zur Verfügung zu stellen, die eine besonders einfachen, effektiven und flexiblen Aufbau aufweist.

Diese Aufgaben werden durch die Merkmale der unabhängigen Ansprüche gelöst. Bevorzugte Weiterbildungen sind in den Unteransprüchen offenbart.

Die vorliegende Erfindung wird vom beiliegenden Anspruch 1 definiert. Erfindungsgemäß ist eine, der Drehspindel zugeordnete, Kühleinrichtung vorgesehen, mittels der die Drehspindel luftgekühlt werden kann.

Auf diese Weise wird eine Bereitstellung von Komplettwerkzeugen mit hoher Wiederholgenauigkeit und Präzision möglich, da durch die Kühlung der Drehspindel einer Erwärmung der Drehspindel entgegengewirkt wird. Dadurch wird die Wärmeausdehnung der Drehspindel verringert und die Messgenauigkeit der Vermessungseinrichtung effektiv erhöht. Insbesondere kann dabei auch eine höhere Anzahl von Komplettwerkzeugen in einem definierten Zeitraum bereitgestellt werden, da es nicht mehr erforderlich ist, die Drehspindel vor einem folgenden Vermessungsvorgang abkühlen zu lassen.

Erfindungsgemäß ist die Kühleinrichtung durch ein der Drehspindel zugeordnetes, insbesondere ringförmiges und/oder scheibenförmiges Kühlelement gebildet, mittels dem die Drehspindel luftgekühlt werden kann. So kann mit einem einfachen Aufbau eine effektive Kühlung der Drehspindel realisiert werden. Insbesondere kann ein derartiges Kühlelement auch mit geringem Aufwand an einer Drehspindel nachgerüstet werden. Bevorzugt ist das Kühlelement dabei aus einem, eine hohe Wärmeleitfähigkeit aufweisenden Material, beispielsweise Aluminium, gefertigt.

Zweckmäßig kann das Kühlelement ein Spindelelement der Drehspindel und/oder ein mit dem Spindelelement lösbar verbundenes, die Halteeinrichtung aufweisendes Adapterelement der Drehspindel ringförmig umgreifen. Bevorzugt ist es dabei, wenn das Kühlelement einen die Halteeinrichtung aufweisenden Halteabschnitt der Drehspindel ring-förmig umgreift. An diesem Halteabschnitt erfolgt die Wärmeübertragung von einem aufgeheizten Komplettwerkzeug in die Drehspindel, so dass durch eine derartige Anordnung des Kühlelements einer Erwärmung der Drehspindel besonders effektiv entgegengewirkt wird.

Für eine effektive Kühlung der Drehspindel kann das ringförmige Kühlelement mit einer inneren Umfangswand, insbesondere in einer flächigen Anlage, an der Drehspindel anliegen. Alternativ oder zusätzlich kann das Kühlelement auch mit wenigstens einer Stirnwand, insbesondere in einer flächigen Anlage, an der Drehspindel anliegen.

Erfindungsgemäß weist das Kühlelement einen, insbesondere ringförmigen und/oder hülsenförmigen, Innenbereich und mehrere nach außen von dem Innenbereich abragende Kühlrippen auf, um einen einfachen und effektiven Aufbau zu realisieren. Dabei ist vorgesehen, dass die Kühlrippen, in Draufsicht auf das Kühlelement gesehen, einen bogenförmigen oder abschnittsweise geradlinigen Verlauf aufweisen. Zweckmäßig kann die Halteeinrichtung der Drehspindel zur Aufnahme einer Werkzeugmaschinen-Schnittstelle einer Werkzeugaufnahme ausgebildet sein. Konkret kann die Halteeinrichtung der Drehspindel beispielsweise eine SK-Schnittstelle (Steilkegel-Schnittstelle), eine HSK-Schnittstelle (Hohlschaftkegel-Schnittstelle) oder eine PSK-Schnittstelle (Polygonschaftkegel-Schnittstelle) aufweisen.

Für eine effektive Vermessung eines Komplettwerkzeugs kann die optische Vermessungseinrichtung wenigstens eine Bild-Erfassungseinrichtung, insbesondere eine Kamera, zur bildlichen und/oder filmischen Erfassung eines an der Drehspindel gehalterten Komplettwerkzeugs aufweisen. Zweckmäßig kann die Vermessungseinrichtung signaltechnisch mit einem Bildschirm und/oder mit einer Datenübertragungseinrichtung zur, insbesondere kabellosen, Übertragung von ermittelten Komplettwerkzeug-Maßen als Daten, insbesondere an einen RFID-Chip, verbunden sein. Die Datenübertragung kann dabei beispielsweise auch über Bluetooth, QR/Datamatrix oder Barcodes erfolgen.

In einer konkreten Ausgestaltung kann die Heizeinrichtung wenigstens ein, eine Induktionsspule aufweisendes, insbesondere auf eine Werkzeugaufnahme aufsetzbares und/oder ringförmiges, Spulenelement zum Aufheizen eines Schrumpffutters einer Werkzeugaufnahme aufweisen. Mittels eines derartigen Spulenelements kann ein Schrumpffutter einer Werkzeugaufnahme effektiv und schnell erhitzt werden.

In einer weiteren bevorzugten Ausgestaltung kann wenigstens ein, insbesondere kühlmittelgekühlter, Kühltopf zur Kühlung eines Komplettwerkzeugs vorgesehen sein, wobei ein Komplettwerkzeug, insbesondere in einer kopfüber-Ausrichtung, teilweise oder vollständig in einem Innenraum des Kühltopfs angeordnet und, insbesondere mit einem Schrumpffutter-Abschnitt einer Werkzeugaufnahme des Komplettwerkzeugs, in, insbesondere flächige, Anlage, mit einer gekühlten Innenwand des Kühltopfs gebracht werden kann. An einem derartigen von der Drehspindel separaten, insbesondere von der Drehspindel beanstandeten, Kühltopf kann ein vermessenes Komplettwerkzeug effektiv und schnell abgekühlt werden.

Für eine gleichzeitige Kühlung mehrerer vermessener Komplettwerkzeuge können mehrere voneinander beabstandete und/oder in Reihe angeordnete Kühltöpfe vorgesehen sein. Zweckmäßig kann der wenigstens eine Kühltopf mittels wenigstens eines Verbindungselements, insbesondere mittels wenigstens einer Verbindungsschraube, fixiert sein.

Gemäß Patentanspruch 8 wird ferner eine Vorrichtung zur, insbesondere automatisierten, Bereitstellung eines Komplettwerkzeugs aus Werkzeugaufnahme und Werkzeug, insbesondere Fräswerkzeug, vorgeschlagen, mit einer ansteuerbaren Bewegungseinrichtung, insbesondere mit einem ansteuerbaren Roboterarm, zur Aufnahme und Bewegung eines Gegenstands, wobei die Bewegungseinrichtung einen Greifer zur Aufnahme einer Werkzeugaufnahme als Gegenstand, insbesondere an einer Greiferrille der Werkzeugaufnahme, aufweist. Erfindungsgemäß kann mittels des Greifers auch ein, insbesondere stabförmiges, Werkzeug als Gegenstand gegriffen und/oder aufgenommen werden.

Mittels eines derartigen Greifers wird eine besonders einfache, effektive und flexible Bereitstellung von Komplettwerkzeugen ermöglicht, da nun mittels eines einzigen Greifers sowohl Werkzeugaufnahmen als auch Werkzeuge gegriffen bzw. aufgenommen werden können. So kann beispielsweise eine automatisierte Bereitstellung bzw. Herstellung eines Komplettwerkzeugs mittels eines einzigen Greifers realisiert werden.

Bevorzugt ist die Bewegungseinrichtung dabei derart ausgebildet, dass sowohl die Position des Greifers durch Translationen entlang dreier lotrechter Achsen (x, y, z) als auch die Orientierung des Greifers durch Rotationen um drei lotrechte Achsen.

In einer bevorzugten Ausgestaltung ist der Greifer mehrteilig ausgebildet, wobei ein erstes und ein zweites Greifer-Teil des Greifers jeweils eine, insbesondere bogenförmige, Werkzeugaufnahme-Greifkontur zur Aufnahme einer Werkzeugaufnahme und eine Werkzeug-Greifkontur zur Aufnahme eines Werkzeugs aufweist, wobei die Greifer-Teile an einem ansteuerbaren Aktuator des Greifers gehaltert sind, mittels dem ein Abstand der Greifer-Teile verstellt werden kann, wobei durch Verringerung des Abstands der Greifer-Teile wenigstens ein Gegenstand eingespannt werden kann. So wird ein einfacher und funktionssicherer Aufbau des Greifers realisiert.

Zweckmäßig können die Werkzeugaufnahme-Greifkontur und die Werkzeug-Greifkontur des jeweiligen Greifer-Teils dabei voneinander beabstandet angeordnet sein. Für einen fertigungstechnisch einfachen Aufbau können das erste und das zweite Greifer-Teil zueinander spiegelsymmetrisch ausgebildet und/oder durch identische, insbesondere plattenförmige, Bauteile gebildet sein.

Zudem wird auch eine Anlage zur, insbesondere automatisierten, Bereitstellung eines Komplettwerkzeugs aus Werkzeugaufnahme und Werkzeug, insbesondere Fräswerkzeug, mit der erfindungsgemäßen Vorrichtung beansprucht. Dabei ist vorgesehen, dass die Anlage eine Wuchtstation zum Überprüfen der Wuchtgüte eines Komplettwerkzeugs und/oder zum Auswuchten eines Komplettwerkzeugs aufweist.

Weiter wird auch ein Verfahren zum Betreiben der erfindungsgemäßen Anlage beansprucht.

Die sich durch die erfindungsgemäße Anlage und die erfindungsgemäße Verfahrensführung ergebenden Vorteile sind identisch mit den bereits gewürdigten Vorteilen der erfindungsgemäßen Vorrichtungen, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

### Es zeigen:

- Fig. 1: in einer Darstellung von oben eine Anlage zur Bereitstellung von Komplettwerkzeugen aus Werkzeugaufnahmen und Werkzeugen;
- Fig. 2: in einer Perspektivdarstellung eine Schrumpf- und Vermessungsstation der Anlage;
- Fig. 3: in einer Perspektivdarstellung eine Kühleinrichtung der Schrumpf- und Vermessungsstation;
- Fig. 4: in einer Perspektivdarstellung ein Adapterelement der Schrumpf- und Vermessungsstation;
- Fig. 5: in einer Darstellung von oben ein ringförmiges Kühlelement des Adapterelements;
- Fig. 6: eine Schnittdarstellung entlang der Schnittebene A-A aus Fig. 4; und
- Fig. 7: in einer Perspektivdarstellung einen Greifer eines Roboterarms der Anlage.

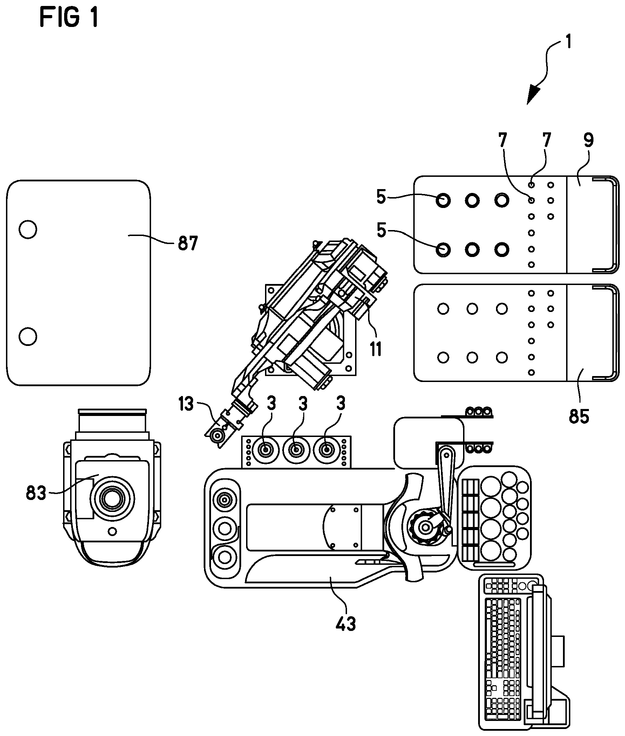

In Fig. 1 ist eine erfindungsgemäße Anlage 1 zur automatisierten Bereitstellung bzw. Herstellung von Komplettwerkzeugen 3 aus Werkzeugaufnahmen 5 und Werkzeugen 7 gezeigt. Die Anlage 1 umfasst einen fahrbaren Werkzeugwagen 9, der mit mehreren Werkzeugaufnahmen 5 und mehreren, hier beispielhaft als Fräswerkzeuge ausgebildeten Werkzeugen 7 beladen ist. Der Werkzeugwagen 9 ist in der Nähe einer hier beispielhaft als Roboterarm 11 ausgebildeten, ansteuerbaren Bewegungseinrichtung angeordnet, mittels der die Werkzeugaufnahmen 5 und die Werkzeuge 7 innerhalb der Anlage 1 bewegt werden können. Dabei befindet sich der Werkzeugwagen 9 im Greifbereich eines Greifers 13 des Roboterarms 11.

Alternativ zu dem Werkzeugwagen 9 könnte die Anlage 1 beispielsweise auch über ein Hochregal verfügen. Des Weiteren könnte die Zuführung beispielsweise auch über ein Kettenmagazin oder Radmagazin für Werkzeugaufnahmen 5 erfolgen. Ebenso wäre eine Zuführung über ein Endloslaufband möglich.

Der Roboterarm 11 ist hier derart ausgebildet, dass die Position des Greifers 13 durch Translationen entlang dreier lotrechter Achsen (x, y, z) und die Orientierung bzw. Ausrichtung des Greifers 13 durch Rotationen um drei lotrechte Achsen geändert werden kann.

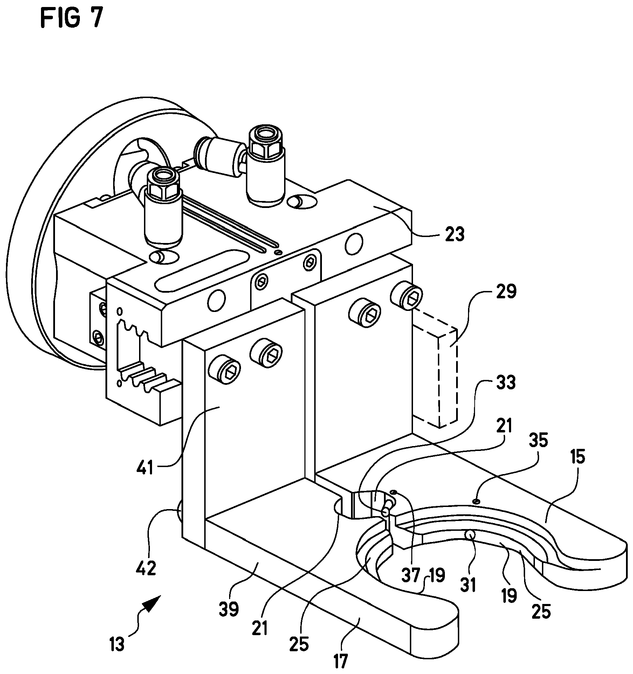

In Fig. 7 ist der Greifer 13 in einer vergrößerten Darstellung gezeigt. Mittels des Greifers 13 können sowohl die Werkzeugaufnahmen 5 als auch die Werkzeuge 7 aufgenommen werden. Gemäß Fig. 7 ist der Greifer 13 mehrteilig ausgebildet, wobei der Greifer 13 ein erstes Greifer-Teil 15 und ein zweites Greifer-Teil 17 aufweist. Jedes Greifer-Teil 15, 17 weist eine durch eine Ausnehmung gebildete, hier beispielhaft bogenförmige, Werkzeugaufnahme-Greifkontur 19 zum Greifen einer Werkzeugaufnahme 5 und eine ebenfalls durch eine Ausnehmung gebildete Werkzeug-Greifkontur 21 zum Greifen eines Werkzeugs 7 auf. Die Greifer-Teile 15, 17 sind an einem ansteuerbaren, hier beispielhaft pneumatisch betriebenen, Aktuator 23 des Greifers 13 gehaltert, mittels dem ein Abstand der Greifer-Teile 15, 17 verstellt werden kann. Durch Verringerung des Abstands der Greifer-Teile 15, 17 können die Werkzeugaufnahmen 5 und die Werkzeuge 7 zwischen den Greifer-Teilen 15, 17 eingespannt und dadurch aufgenommen werden.

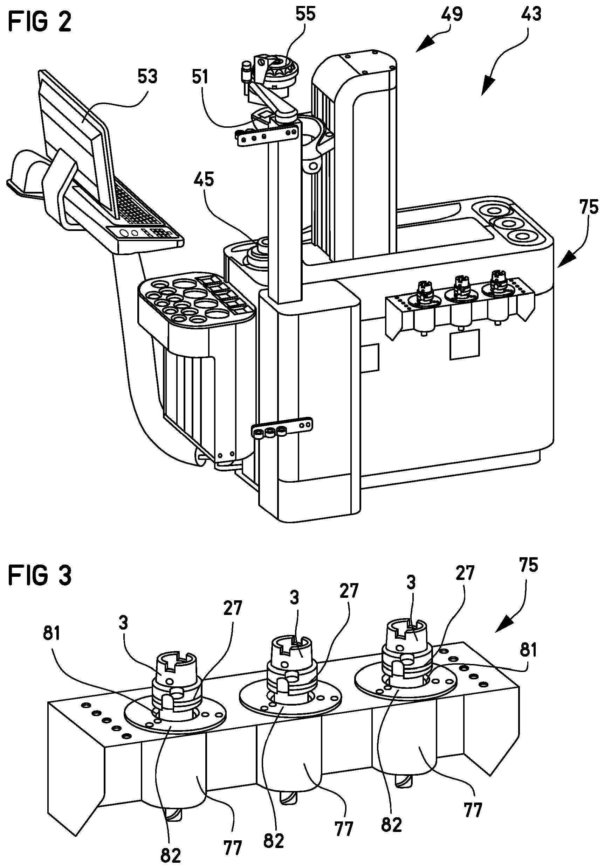

Zum Greifen einer Werkzeugaufnahme 5 weist jedes Greifer-Teil 15, 17 hier zudem einen nach innen abragenden, ringsegmentförmigen Steg 25 auf, mit dem das jeweilige Greifer-Teil 15, 17 in eine umlaufende Greiferrille 27 (Fig. 3) der jeweiligen Werkzeugaufnahme 5 eingreifen kann.

Wie in Fig. 7 weiter gezeigt ist, weist der Greifer 13 zudem einen Sensor 29 auf. Mittels des Sensors 29 kann ermittelt werden, ob sich in der Nähe des Greifers 13 ein Komplettwerkzeug 3 oder eine Werkzeugaufnahme 5 befindet. Der Sensor 29 ist hier beispielhaft durch einen Ultraschallsensor gebildet. Zudem weist der Greifer 13 auch Sensoren 31, 33 auf. Der Sensor 31 ist dabei der Werkzeugaufnahme-Greifkontur 19 eines Greifer-Teils zugeordnet, während der Sensor 33 der Werkzeug-Greifkontur 21 eines Greifer-Teils zugeordnet ist. Mittels des Sensors 33 kann dabei ermittelt werden, ob an dem Greifer 13 aktuell ein Werkzeug 7 eingespannt bzw. aufgenommen ist. Mittels des Sensors 31 kann ermittelt werden, ob an dem Greifer 13 aktuell eine Werkzeugaufnahme 5 eingespannt ist. Die Sensoren 31, 33 sind hier beispielhaft durch induktive Sensoren gebildet. Zudem ist jeder der hier stiftförmigen Sensoren 31, 33 in einer Ausnehmung des Greifer-Teils 15 angeordnet und mittels einer Klemmschraube 35, 37 in der Ausnehmung gehaltert.

Gemäß Fig. 7 ist hier jedes Greifer-Teil 15, 17 durch zwei miteinander verbundene Plattenkörper 39, 41 gebildet. Die Plattenkörper 39, 41 des jeweiligen Greifer-Teils 15, 17 sind dabei mittels mehrerer Verbindungselemente 42, hier beispielhaft Verbindungsschrauben, miteinander verbunden. An dem Plattenkörper 39 des jeweiligen Greifer-Teils 15, 17 sind dabei die Werkzeugaufnahme-Greifkontur 19 und die Werkzeug-Greifkontur 21 ausgebildet. An dem Plattenkörper 41 des jeweiligen Greifer-Teils 15, 17 sind Ausnehmungen, hier beispielhaft Bohrungen, zur Verbindung der Greifer-Teile 15, 17 mit dem Aktuator 23 vorgesehen. Des Weiteren sind die Plattenkörper 41 der Greifer-Teile 15, 17 hier identisch ausgebildet bzw. gestaltet. Zudem sind die Greifer-Teile 15, 17 im Wesentlichen zueinander spiegelsymmetrisch ausgebildet.

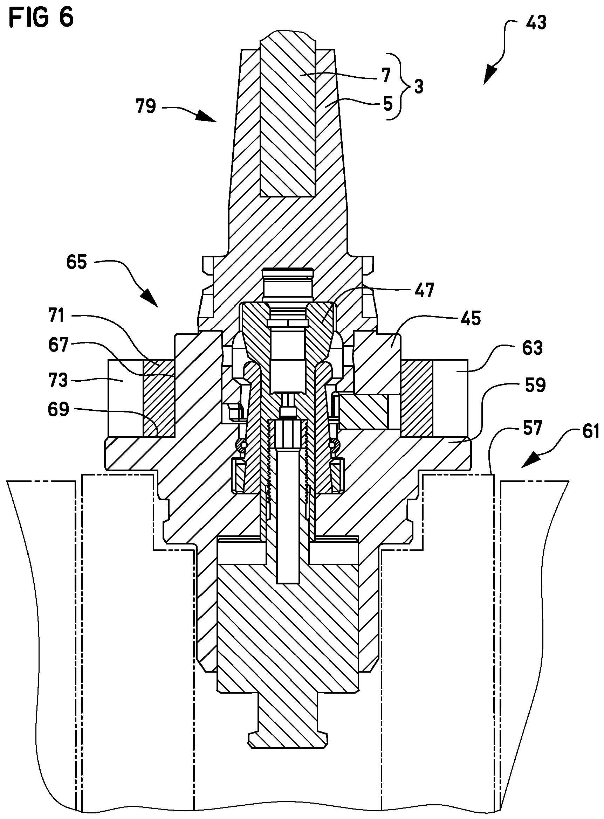

Wie weiter in Fig. 1 gezeigt ist, weist die Anlage 1 auch eine ansteuerbare Schrumpf- und Vermessungsstation 43 auf. Die Schrumpf- und Messstation 43 ist ebenfalls im Greifbereich des Greifers 13 des Roboterarms 11 angeordnet. Gemäß Fig. 2 weist die Schrumpf- und Messstation 43 eine mittels einer Antriebseinrichtung drehantreibbare Drehspindel 45 auf. Die Drehspindel 45 verfügt über eine Halteeinrichtung 47 (Fig. 6) zur Halterung einer Werkzeugaufnahme 5 bzw. eines Komplettwerkzeugs 3. Die Halteeinrichtung 47 ist hier beispielhaft durch eine HSK-Schnittstelle gebildet. Zudem weist die Schrumpf- und Messstation 43 auch eine im Bereich der Drehspindel 45 angeordnete, hier beispielhaft optische, Vermessungseinrichtung 49 zur Vermessung eines an der Drehspindel 45 gehalterten Komplettwerkzeugs 3 auf. Mittels der Vermessungseinrichtung 49 kann dabei beispielsweise die Länge eines Komplettwerkzeugs 3 und der Durchmesser eines Werkzeugs 7 des Komplettwerkzeugs 3 ermittelt werden. Während der Vermessung eines Komplettwerkzeugs 3 kann die Drehspindel 45 dabei mit dem daran gehalterten Komplettwerkzeug 3 axial gedreht werden.

Die optische Vermessungseinrichtung 49 weist hier eine Kamera 51 als Bild-Erfassungseinrichtung zur bildlichen und/oder filmischen Erfassung eines an der Drehspindel 45 gehalterten Komplettwerkzeugs 3 auf. Zudem ist die Vermessungseinrichtung 49 auch signaltechnisch mit einem Bildschirm 53 zur Anzeige der Kameraaufnahmen verbunden. Weiter ist die Vermessungseinrichtung 49 auch signaltechnisch mit einer hier nicht gezeigten Datenübertragungseinrichtung zur kabellosen Übertragung von ermittelten Komplettwerkzeug-Maßen als Daten an einen RFID-Chip einer Werkzeugaufnahme 5 verbunden.

Wie in Fig. 2 weiter gezeigt ist, weist die Schrumpf- und Messstation 43 auch eine im Bereich der Drehspindel 45 angeordnete Heizeinrichtung zum Aufheizen des Schrumpffutters einer an der Drehspindel 45 gehalterten Werkzeugaufnahme 5 auf. Die Heizeinrichtung weist hier ein, eine Induktionsspule aufweisendes, auf eine Werkzeugaufnahme 5 aufsetzbares ringförmiges Spulenelement 55 zum induktiven Aufheizen eines Schrumpffutters auf.

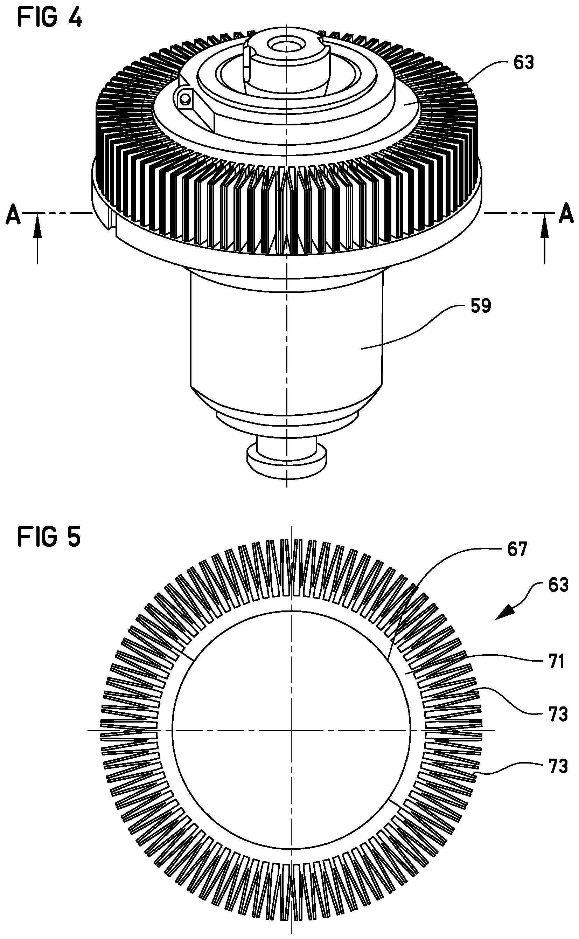

Anhand der Fig. 4 bis 6 wird nun der Aufbau der Drehspindel 45 näher erläutert. In Fig. 6 ist ein Komplettwerkzeug 3 an der Drehspindel 45 gehaltert. Die Drehspindel 45 weist ein in Fig. 6 mit gestrichelten Linien angedeutetes Spindelelement 57 und ein lösbar an dem Spindelelement 57 festgelegtes Adapterelement 59 auf. An dem Adapterelement 59 ist die Halteeinrichtung 47 zur Halterung einer Werkzeugaufnahme 5 ausgebildet. Das Spindelelement 57 ist axial drehbar in einer Spindelaufnahme 61 der Schrumpf- und Messstation 43 gehaltert. In einer alternativen Ausgestaltung der Drehspindel könnte die Halteeinrichtung 47 auch an dem Spindelelement selbst vorgesehen sein, so dass hier dann das Adapterelement 59 nicht benötigt wird.

Wie aus Fig. 6 weiter hervorgeht, ist der Drehspindel 45 ein ringförmiges Kühlelement 63 zugeordnet, mittels dem die Drehspindel 45 luftgekühlt wird. Auf diese Weise wird der Wärmeeintrag in die Drehspindel 45 effektiv verringert, wodurch eine Vermessung von an der Drehspindel 45 gehalterten Komplettwerkzeugen 3 mit einer erhöhten Messgenauigkeit ermöglicht wird. Sofern an der Drehspindel 45 ein aufgeheiztes Komplettwerkzeug 3 gehaltert ist, wird auch dieses mittels des Kühlelements 63 gekühlt.

Das Kühlelement 63 umgreift hier das Adapterelement 59 der Drehspindel 45 ringförmig. Konkret umgreift das Kühlelement 63 dabei einen die Halteeinrichtung 47 aufweisenden Halteabschnitt 65 des Adapterelements 59 ringförmig. Das ringförmige Kühlelement 63 liegt dabei sowohl mit einer inneren Umfangswand 67 als auch mit einer Stirnwand 69 in einer flächigen Anlage an dem Adapterelement 59 der Drehspindel 45 an. Bei einer alternativen Ausgestaltung der Drehspindel könnte das Kühlelement 63 auch das Spindelelement 57 ringförmig umgreifen.

Weiter weist das Kühlelement 63 hier einen hülsenförmigen Innenbereich 71 und mehrere nach außen von dem Innenbereich 71 abragende Kühlrippen 73 (Fig. 5) auf. Jede Kühlrippe 73 weist dabei einen inneren Bereich mit einem einzigen, geradlinig verlaufenden Kühlrippen-Steg auf, der sich nach außen zu zwei geradlinig verlaufenden Kühlrippen-Stegen verzweigt. Alternativ könnten beispielsweise auch Kühlrippen mit einem einzigen, durchgehend bogenförmig verlaufenden Kühlrippen-Steg vorgesehen sein.

Wie in Fig. 2 weiter gezeigt ist, weist die Schrumpf- und Messstation 43 auch eine Kühleinrichtung 75 zur Kühlung von vermessenen Komplettwerkzeugen 3 auf. Die Kühleinrichtung 75 weist hier mehrere in Reihe angeordnete Kühltöpfe 77 auf, wobei mittels jedes Kühltopfs 77 ein Komplettwerkzeug 3 gekühlt werden kann. Hierzu kann ein Komplettwerkzeug 3 in einer kopfüber-Ausrichtung, d.h. mit eingespanntem Werkzeug 7 voraus, teilweise in einem Innenraum eines Kühltopfs 77 angeordnet und mit einem Schrumpffutter-Abschnitt 79 (Fig. 6) der Werkzeugaufnahme 5 in flächige Anlage mit einer gekühlten Innenwand 81 des Kühltopfs 77 gebracht werden. Die Kühltöpfe 77 verfügen hier über eine Flüssigkeitskühlung. Zur Befestigung der Kühltöpfe 77 an der Schrumpf- und Messstation 43 weist jeder Kühltopf 77 einen nach außen abragenden Ringflansch 82 mit durchgängigen Ausnehmungen auf, durch die Verbindungselemente, hier beispielhaft Verbindungsschrauben, geführt sind. Zudem ist hier jeder Kühltopf 77 unterseitig geöffnet.

Wie weiter in Fig. 1 gezeigt ist, weist die Anlage 1 auch eine ansteuerbare Wuchtstation 83 auf, mittels der die Wuchtgüte eines vermessenen und abgekühlten Komplettwerkzeugs 3 überprüft werden kann. Optional könnte die Wuchtstation 83 auch derart ausgebildet sein, dass mittels dieser ein Komplettwerkzeug 3 ausgewuchtet werden kann. Zudem weist die Anlage 1 einen fahrbaren Werkzeugwagen 85 auf, der mit geprüften Komplettwerkzeugen 3 beladen werden kann. Alternativ zu dem Werkzeugwagen 85 könnte die Anlage 1 auch über ein Hochregallager verfügen. Die Auswuchtstation 83 und der Werkzeugwagen 85 sind ebenfalls im Greifbereich des Greifers 13 des Roboterarms 11 angeordnet. Weiter weist die Anlage 1 auch eine Steuerungsstation 87 auf, mittels der der Roboterarm 11, die Schrumpf- und Messstation 43 und die Auswuchtstation 83 gesteuert werden, so dass die Anlage 1 automatisiert betrieben werden kann. Alle ansteuerbaren Einrichtungen der Anlage 1 sind dabei über einen Leitrechner der Steuerungsstation 87 daten- und/oder signalübertragend modular miteinander vernetzt.

Nachfolgend wird nun noch ein beispielhafter automatisierter Betrieb der Anlage 1 bzw. ein Verfahren zum Betreiben der Anlage 1 näher erläutert:
In der Ausgangssituation ist der Werkzeugwagen 9 mit Werkzeugaufnahmen 5 und Werkzeugen 7 beladen. Zunächst wird mit dem Roboterarm 11 eine Werkzeugaufnahme 5 von dem Werkzeugwagen 9 aufgenommen. Mittels einer, beispielsweise dem Werkzeugwagen 9 zugeordneten, Reinigungseinrichtung, beispielsweise einer Bürste, wird dann eine Aufnahmebohrung der aufgenommenen Werkzeugaufnahme 5 gereinigt. In ähnlicher Weise kann auch in regelmäßigen Abständen der Schnittstellenbereich der Drehspindel mit einer, beispielsweise mit dem Roboterarm 11 greifbaren, Wischvorrichtung gereinigt werden. Anschließend wird die Werkzeugaufnahme 5 mittels des Roboterarms 11 in die HSK-Schnittstelle der Drehspindel 45 eingesetzt. Die HSK-Schnittstelle der Drehspindel 45 wird dann geschlossen, so dass die Werkzeugaufnahme 5 fest an der Drehspindel 45 gehaltert ist. Die Werkzeugaufnahme 5 wird schließlich durch einen an der Werkzeugaufnahme 5 angebrachten RFID-Chip identifiziert und das passende Programm zum Einschrumpfen eines Werkzeugs 7 aufgerufen.

Anschließend wird mit dem Roboterarm 11 ein Werkzeug 7 von dem Werkzeugwagen 9 aufgenommen. Das aufgenommene Werkzeug 7 weist einen lesbaren Code, beispielsweise einen QR-Code, Barcode oder Datamatrix-Code, auf, der mit einer, beispielsweise am Roboterarm 11 angebrachten, Leseeinrichtung gelesen wird. Nach Identifizierung und Prüfung des Codes wird die Werkzeugaufnahme 5 mittels der Heizeinrichtung 53 aufgeheizt und das Werkzeug 5 mittels des Roboterarms 11 in die Werkzeugaufnahme 7 eingesetzt. Schließlich wird das Werkzeug 5 dann in die Werkzeugaufnahme 7 eingeschrumpft und dabei auch ein gewünschtes Z-Maß bzw. Längenmaß des Komplettwerkzeugs 3 mittels des Roboterarms 11 und der Vermessungseinrichtung 49 eingestellt. Alternativ zur Einstellung mittels des Roboterarms 11 könnte das Z-Maß des Komplettwerkzeugs 3 beispielsweise auch mittels eines an der Drehspindel 45 angebrachten, aus der Drehspindel 45 ausfahrbaren Anschlagelements bzw. Anschlagdorn als Anschlag für ein in eine Werkzeugaufnahme 5 eingesetztes Werkzeug 7 erfolgen.

Das Komplettwerkzeug 3 wird dann mit dem Roboterarm 11 aus der Drehspindel 45 entnommen und zur Abkühlung in einen der Kühltöpfe 77 eingesetzt, bis das Komplettwerkzeug 3 die gewünschte Temperatur, beispielsweise Raumtemperatur, erreicht. Die Temperatur des Komplettwerkzeugs 3 wird dabei mittels eines Temperatursensors des jeweiligen Kühltopfs 77 gemessen. Anschließend wird das gekühlte Komplettwerkzeug 3 mit dem Roboterarm 11 aus dem Kühltopf 77 entnommen und zur Überprüfung der Wuchtgüte in die Wuchtstation 83 eingesetzt. Auch die Spindel der Wuchtstation 83 kann in regelmäßigen Abständen mit einer Wischvorrichtung, beispielsweise mit dem Roboterarm 11 greifbaren, gereinigt werden. Nach dieser Überprüfung wird das Komplettwerkzeug 3 mit dem Roboterarm 11 aus der Wuchtstation 83 entnommen. Vor der Vermessung der Schneiden des Komplettwerkzeugs 3 werden die Schneiden von Staub und anderen Anhaftungen gereinigt, beispielsweise durch Eintauchen des Schneidenbereichs eines Komplettwerkzeugs 3 in ein Reinigungsbad oder durch Betupfen mit einer klebrigen Masse. Anschließend wird das Komplettwerkzeug 3 in die HSK-Schnittstelle der Drehspindel 45 eingesetzt. Die HSK-Schnittstelle der Drehspindel 45 wird dann geschlossen, so dass die Werkzeugaufnahme 5 fest an der Drehspindel 45 gehaltert ist. Das Komplettwerkzeug 3 wird schließlich wieder durch den an der Werkzeugaufnahme 5 angebrachten RFID-Chip identifiziert und nun das passende Programm zum Vermessen des Komplettwerkzeugs 3 aufgerufen. Anschließend wird das Komplettwerkzeug 3 mittels der Vermessungseinrichtung 49 vermessen. Dabei wird das Komplettwerkzeug 3 mittels der Drehspindel 45 axial gedreht. Nach dem Vermessen wird das Komplettwerkzeug 3 mit dem Roboterarm 11 aus der Drehspindel 45 entnommen und auf dem Werkzeugwagen 85 abgestellt. Sofern die Wuchtgüte des Komplettwerkzeugs 3 nicht ausreichend ist, kann dieses noch von einem Werker manuell ausgewuchtet werden.

In einer alternativen Betriebsweise könnte die Anlage 1 auch zum Ausschrumpfen von Werkzeugen 7 aus Werkzeugaufnahmen 5 verwendet werden.

**Bezugszeichenliste**

| | | | |
|---|---|---|---|
| 1 | Anlage | 41 | Plattenkörper |
| 3. | Komplettwerkzeug | 43 | Schrumpf- und Messstation |
| 5. | Werkzeugaufnahme | 45 | Drehspindel |
| 7 | Werkzeug | 47 | Halteeinrichtung |
| 9 | Werkzeugwagen | 49 | Vermessungseinrichtung |
| 11 | Roboterarm | 51 | Kamera |
| 13 | Greifer | 53 | Bildschirm |
| 15 | Greifer-Teil | 55 | Spulenelement |
| 17 | Greifer-Teil | 57 | Spindelelement |
| 19 | Werkzeugaufnahme-Greifkontur | 59 | Adapterelement |
| 21 | Werkzeug-Greifkontur | 61 | Spindelaufnahme |
| 23 | Aktuator | 63 | Kühlelement |
| 25 | Steg | 65 | Halteabschnitt |
| 27 | Greiferrille | 67 | Umfangswand |
| 29 | Sensor | 69 | Stirnwand |
| 31 | Sensor | 71 | Innenbereich |
| 33 | Sensor | 73 | Kühlrippe |
| 35 | Klemmschraube | 75 | Kühleinrichtung |
| 37 | Klemmschraube | 77 | Kühltopf |
| 39 | Plattenkörper | 79 | Schrumpffutter-Abschnitt |
| 81 | Innenwand | | |
| 83 | Wuchtstation | | |
| 85 | Werkzeugwagen | | |
| 87 | Steuerungsstation | | |
| 42 | Verbindungselement | | |
| 82 | Ringflansch | | |

## Patentansprüche

1. Vorrichtung zur, insbesondere automatisierten, Bereitstellung eines Komplettwerkzeugs (3) aus Werkzeugaufnahme (5) und Werkzeug (7), insbesondere Bohr- und/oder Fräswerkzeug, mit einer mittels einer Antriebseinrichtung drehantreibbaren Drehspindel (45), wobei die Drehspindel (45) eine Halteeinrichtung (47) zur Halterung einer Werkzeugaufnahme (5) aufweist, wobei im Bereich der Drehspindel (45) eine, insbesondere optische, Vermessungseinrichtung (49) zur Vermessung eines an der Drehspindel (45) gehalterten Komplettwerkzeugs (3) und eine Heizeinrichtung (55) zum Aufheizen eines Schrumpffutters (79) einer an der Drehspindel (45) gehalterten Werkzeugaufnahme (5) angeordnet sind und wobei eine der Drehspindel zugeordnete Kühleinrichtung (63) vorgesehen ist, mittels der die Drehspindel (45) luftkühlbar ist, **dadurch gekennzeichnet, dass** die Kühleinrichtung durch ein der Drehspindel (45) zugeordnetes Kühlelement (63) gebildet ist, mittels der die Drehspindel (45) luftkühlbar ist, wobei das Kühlelement (63) einen Innenbereich (71) und mehrere nach außen von dem Innenbereich (71) abragende Kühlrippen (73) aufweist.

2. Vorrichtung nach Anspruch 1, **dadurch gekennzeichnet, dass** die Kühleinrichtung durch ein ringförmiges und/oder scheibenförmiges Kühlelement (63) gebildet ist.

3. Vorrichtung nach Anspruch 2, **dadurch gekennzeichnet, dass** das Kühlelement (63) ein Spindelelement (57) der Drehspindel (45) und/oder ein mit dem Spindelelement (57) lösbar verbundenes, die Halteeinrichtung (47) aufweisendes Adapterelement (59) der Drehspindel (45) ringförmig umgreift, wobei bevorzugt vorgesehen ist, dass das Kühlelement (63) einen die Halteeinrichtung (47) aufweisenden Halteabschnitt (65) der Drehspindel (45) ringförmig umgreift und/oder dass das Kühlelement (63) mit einer inneren Umfangswand (67), insbesondere in einer flächigen Anlage, an der Drehspindel (45) anliegt, und/oder dass das Kühlelement (63) mit wenigstens einer Stirnwand (69), insbesondere in einer flächigen Anlage, an der Drehspindel (45) anliegt.

4. Vorrichtung nach einem der Ansprüche 2 bis 3, **dadurch gekennzeichnet, dass** das Kühlelement (63) einen ringförmigen und/oder hülsenförmigen Innenbereich (71) aufweist, wobei vorgesehen ist, dass die Kühlrippen (73), in Draufsicht auf das Kühlelement (63) gesehen, einen bogenförmigen oder abschnittsweise geradlinigen Verlauf aufweisen.

5. Vorrichtung nach einem der vorhergehenden Ansprüche, **dadurch gekennzeichnet, dass** die Halteeinrichtung (47) der Drehspindel (45) zur Aufnahme einer Werkzeugmaschinen-Schnittstelle einer Werkzeugaufnahme (5) ausgebildet ist, wobei bevorzugt vorgesehen ist, dass die Halteeinrichtung (47) der Drehspindel (45) eine SK-Schnittstelle, eine HSK-Schnittstelle oder eine PSK-Schnittstelle aufweist.

6. Vorrichtung nach einem der vorhergehenden Ansprüche, **dadurch gekennzeichnet, dass** die optische Vermessungseinrichtung (49) wenigstens eine Bild-Erfassungseinrichtung (51) zur bildlichen und/oder filmischen Erfassung eines an der Drehspindel (45) gehalterten Komplettwerkzeugs (3) aufweist, und/oder dass die Vermessungseinrichtung (49) signaltechnisch mit einer Datenübertragungseinrichtung zur, insbesondere kabellosen, Übertragung von ermittelten Komplettwerkzeug-Maßen als Daten aufweist und/oder dass die Heizeinrichtung wenigstens ein, eine Induktionsspule aufweisendes, insbesondere auf eine Werkzeugaufnahme (5) aufsetzbares und/oder ringförmiges, Spulenelement (55) zum Aufheizen eines Schrumpffutters (79) einer Werkzeugaufnahme (5) aufweist.

7. Vorrichtung nach einem der vorhergehenden Ansprüche, **dadurch gekennzeichnet, dass** wenigstens ein, insbesondere kühlmittelgekühlter, Kühltopf (77) zur Kühlung eines Komplettwerkzeugs (3) vorgesehen ist, wobei ein Komplettwerkzeug (3), insbesondere in einer kopfüber-Ausrichtung, teilweise oder vollständig in einem Innenraum des Kühltopfs (77) anordenbar und, insbesondere mit einem Schrumpffutter-Abschnitt (79) einer Werkzeugaufnahme (5) des Komplettwerkzeugs (3), in Anlage mit einer gekühlten Innenwand (81) des Kühltopfs (77) bringbar ist.

8. Vorrichtung nach einem der vorhergehenden Ansprüche, **dadurch gekennzeichnet, dass** eine ansteuerbare Bewegungseinrichtung (11), insbesondere mit einem ansteuerbaren Roboterarm, zur Aufnahme und Bewegung eines Gegenstands vorgesehen ist, wobei die Bewegungseinrichtung (11) einen Greifer (13) zur Aufnahme einer Werkzeugaufnahme (5) als Gegenstand, insbesondere an einer Greiferrille (27) der Werkzeugaufnahme (5), aufweist, wodurch mittels des Greifers (13) auch ein, insbesondere stabförmiges, Werkzeug (7) als Gegenstand greifbar und/oder aufnehmbar ist.

9. Vorrichtung nach Anspruch 8, **dadurch gekennzeichnet, dass** der Greifer (13) mehrteilig ausgebildet ist, wobei ein erstes und ein zweites Greifer-Teil (15, 17) des Greifers (13) jeweils eine, insbesondere bogenförmige, Werkzeugaufnahme-Greifkontur (19) zur Aufnahme einer Werkzeugaufnahme (5) und eine Werkzeug-Greifkontur (21) zur Aufnahme eines Werkzeugs (7) aufweist, wobei die Greifer-Teile (15, 17) an einem ansteuerbaren Aktuator (23) des Greifers (13) gehaltert sind, mittels dem ein Abstand der Greifer-Teile (15, 17) verstellbar ist, wobei durch Verringerung des Abstands der Greifer-Teile (15, 17) eine Werkzeugaufnahme (5) und/oder ein Werkzeug (7) einspannbar ist.

10. Vorrichtung nach Anspruch 9, **dadurch gekennzeichnet, dass** die Werkzeugaufnahme-Greifkontur (19) und die Werkzeug-Greifkontur (21) des jeweiligen Greifer-Teils (15, 17) voneinander beabstandet angeordnet sind, und/oder dass das erste und das zweite Greifer-Teil (15, 17) zueinander spiegelsymmetrisch ausgebildet sind und/oder durch identische Bauteile (39, 41) gebildet sind.

11. Vorrichtung nach einem der Ansprüche 8 bis 10, **dadurch gekennzeichnet, dass** die Bewegungseinrichtung, insbesondere der Greifer der Bewegungseinrichtung, einen Sensor, insbesondere einen Ultraschallsensor, zur Erfassung von in einem definierten Nahbereich im Bereich des Greifers befindlichen Werkzeugaufnahmen und/oder Komplettwerkzeugen aufweist.

12. Anlage zur, insbesondere automatisierten, Bereitstellung eines Komplettwerkzeugs (3) aus Werkzeugaufnahme (5) und Werkzeug (7), insbesondere Bohr- und/oder Fräswerkzeug, mit einer Vorrichtung nach einem der voranstehenden Ansprüche, wobei vorgesehen ist, dass eine Wuchtstation (83) zum Überprüfen der Wuchtgüte eines Komplettwerkzeugs (3) und/oder zum Auswuchten eines Komplettwerkzeugs (3) vorgesehen ist.

13. Anlage nach Anspruch 12, **dadurch gekennzeichnet, dass** die Wuchtstation, insbesondere alle ansteuerbaren Einrichtungen der Anlage, über einen Leitrechner daten- und/oder signalübertragend miteinander vernetzt sind, und/oder dass die mittels der Vermessungseinrichtung ermittelten Komplettwerkzeug-Maße als Daten auf einem RFID-Chip eines vermessenen Komplettwerkzeugs speicherbar und/oder an ein zentrales Datennetz übermittelbar sind.

14. Verfahren zum Betreiben einer Anlage nach Anspruch 12 oder 13.

## Claims

1. Apparatus for the provision, in particular automated provision, of a complete tool (3) comprising a toolholder (5) and a tool (7), in particular a drilling and/or milling tool, having a spindle (45) that can be driven in rotation by means of a driving device, wherein the spindle (45) has a holding device (47) for holding a toolholder (5), wherein disposed in the region of the spindle (45) are a measuring device (49), in particular an optical measuring device, for measuring a complete tool (3), held on the spindle (45), and a heating device (55) for heating a shrink-fit chuck (79) of a toolholder (5) held on the spindle (45), and wherein provided is a cooling device (63) assigned to the spindle, by means of which the spindle (45) is able to be air-cooled, **characterized in that** the cooling device is formed by a cooling element (63) assigned to the spindle (45), by means of which the spindle (45) is able to be air-cooled, wherein the cooling element (63) has an inner region (71) and a plurality of cooling ribs (73) protruding outwards from the inner region (71).

2. Apparatus according to Claim 1, **characterized in that** the cooling device is formed by a ring-shaped and/or disc-shaped cooling element (63).

3. Apparatus according to Claim 2, **characterized in that** the cooling element (63) surrounds in a ring shape a spindle element (57) of the spindle (45) and/or an adapter element (59) of the spindle (45), said adapter element being releasably connected to the spindle element (57) and having the holding device (47), wherein provision is preferably made for the cooling element (63) to surround in a ring shape a holding section (65) of the spindle (45), said holding section having the holding device (47), and/or **in that** the cooling element (63) by way of an inner circumferential wall (67) bears, in particular in a planar manner, on the spindle (45), and/or **in that** the cooling element (63) by way of at least one end wall (69) bears, in particular in a planar manner, on the spindle (45).

4. Apparatus according to one of Claims 2 to 3, **characterized in that** the cooling element (63) has a ring-shaped and/or sleeve-shaped inner region (71), wherein it is provided that the cooling ribs (73), when viewed in top view onto the cooling element (63), have an arcuate or in portions rectilinear profile.

5. Apparatus according to one of the preceding claims, **characterized in that** the holding device (47) of the spindle (45) is designed to receive a machine tool interface of a toolholder (5), wherein it is preferably provided that the holding device (47) of the spindle (45) has an SK interface, an HSK interface, or a PSK interface.

6. Apparatus according to one of the preceding claims, **characterized in that** the optical measuring device (49) has at least one image acquisition device (51) for acquiring images and/or film recordings of a complete tool (3) held on the spindle (45), and/or **in that** the measuring device (49) has a signal link to a data transmission device for the transmission, in particular wireless transmission, of determined complete-tool dimensions as data, and/or **in that** the heating device has at least one coil element (55), which has an induction coil, for heating a shrink-fit chuck (79) of a toolholder (5), in particular a coil element that is attachable to a toolholder (5) and/or is ring-shaped.

7. Apparatus according to one of the preceding claims, **characterized in that** at least one, in particular coolant-cooled, cooling pot (77) for cooling a complete tool (3) is provided, wherein a complete tool (3) can be disposed partially or completely in an interior space of the cooling pot (77), in particular in an upside down orientation, and can be brought into contact with a cooled inner wall (81) of the cooling pot (77), in particular by means of a shrink-fit chuck section (79) of a toolholder (5) of the complete tool (3).

8. Apparatus according to one of the preceding claims, **characterized in that** provided is an actuatable movement device (11), in particular having an actuatable robotic arm, for picking up and moving an object, wherein the movement device (11) has a gripper (13) for picking up a toolholder (5) as an object, in particular at a gripper groove (27) of the toolholder (5), as a result of which an in particular bar-shaped tool (7) is also able to be gripped and/or picked up as an object by means of the gripper (13).

9. Apparatus according to Claim 8, **characterized in that** the gripper (13) is of multi-part design, wherein a first and a second gripper part (15, 17) of the gripper (13) each have a toolholder gripping contour (19), in particular an arc-shaped toolholder gripping contour, for picking up a toolholder (5) and a tool gripping contour (21) for picking up a tool (7), wherein the gripper parts (15, 17) are held on a controllable actuator (23) of the gripper (13), by means of which a spacing of the gripper parts (15, 17) can be adjusted, wherein a toolholder (5) and/or a tool (7) can be clamped by reducing the spacing of the gripper parts (15, 17).

10. Apparatus according to Claim 9, **characterized in that** the toolholder gripping contour (19) and the tool gripping contour (21) of the respective gripper part (15, 17) are disposed spaced apart from one another, and/or in that the first and the second gripper part (15, 17) are formed in mirror symmetry with one another and/or are formed by identical components (39, 41).

11. Apparatus according to one of Claims 8 to 10, **characterized in that** the movement device, in particular the gripper of the movement device, has a sensor, in particular an ultrasonic sensor, for detecting toolholders and/or complete tools situated in a defined proximity zone in the region of the gripper.

12. System for the provision, in particular the automated provision, of a complete tool (3) comprising a toolholder (5) and a tool (7), in particular a drilling and/or milling tool, having an apparatus according to one of the preceding claims, wherein provision is made for a balancing station (83) for checking the balance of a complete tool (3) and/or for balancing a complete tool (3) to be provided.

13. System according to Claim 12, **characterized in that** the balancing station, in particular all the actuatable devices of the system, are networked via a master computer in terms of data and/or signal transmission, and/or **in that** the complete tool dimensions determined by means of the measuring device can be stored as data on an RFID chip of a measured complete tool and/or can be transmitted to a central data network.

14. Method for operating a system according to Claim 12 or 13.

## Revendications

1. Dispositif, en particulier automatisé, de mise à disposition d'un outil complet (3) composé d'un porte-outil (5) et d'un outil (7), en particulier d'un outil de perçage et/ou de fraisage, avec une broche rotative (45) entraînée en rotation au moyen d'un système d'entraînement, la broche rotative (45) comportant un système de maintien (47) pour maintenir un porte-outil (5), un système de mesure (49), en particulier optique, destiné à mesurer un outil complet (3) maintenu sur la broche rotative (45) et un système de chauffage (55) destiné à chauffer un mandrin de rétraction (79) d'un porte-outil (5) maintenu sur la broche rotative (45) étant disposés dans la zone de la broche rotative (45) et un système de refroidissement (63) associé à la broche rotative étant prévu, au moyen duquel la broche rotative (45) peut être refroidie par air, **caractérisé en ce que** le système de refroidissement est formé par un élément de refroidissement (63) associé à la broche rotative (45), au moyen duquel la broche rotative (45) peut être refroidie par air, l'élément de refroidissement (63) comportant une zone intérieure (71) et plusieurs nervures de refroidissement (73) dépassant vers l'extérieur de la zone intérieure (71).

2. Dispositif selon la revendication 1, **caractérisé en ce que** le système de refroidissement est formé par un élément de refroidissement (63) annulaire et/ou en forme de disque.

3. Dispositif selon la revendication 2, **caractérisé en ce que** l'élément de refroidissement (63) entoure de manière annulaire un élément de broche (57) de la broche rotative (45) et/ou un élément adaptateur (59) de la broche rotative (45) relié de manière amovible à l'élément de broche (57), comportant le système de maintien (47), le fait que l'élément de refroidissement (63) entoure de manière annulaire une section de maintien (65) de la broche rotative (45) comportant le système de maintien (47), et/ou que l'élément de refroidissement (63) repose sur la broche rotative (45), en particulier en appui à plat, par une paroi périphérique intérieure (67) et/ou que l'élément de refroidissement (63) repose sur la broche rotative (45), en particulier en appui à plat, par au moins une paroi frontale (69) étant de manière préférée prévu.

4. Dispositif selon l'une des revendications 2 à 3, **caractérisé en ce que** l'élément de refroidissement (63) comporte une zone intérieure (71) annulaire et/ou en forme de douille, le fait que les nervures de refroidissement (73) présentent, vues dans une vue en plan de l'élément de refroidissement (63), un profil arqué ou par endroits rectiligne étant prévu.

5. Dispositif selon l'une des revendications précédentes, **caractérisé en ce que** le système de maintien (47) de la broche rotative (45) est formé pour recevoir une interface machine-outil d'un porte-outil (5), le fait que le système de maintien (47) de la broche rotative (45) comporte une interface SK, une interface HSK ou une interface PSK étant de manière préférée prévu.

6. Dispositif selon l'une des revendications précédentes, **caractérisé en ce que** le système de mesure optique (49) comporte au moins un système de détection d'image (51) pour la détection d'image et/ou de film d'un outil complet (3) maintenu sur la broche rotative (45), et/ou que le système de mesure (49) comporte, par une technique de signalisation, un système de transmission de données pour la transmission, en particulier sans fil, de dimensions d'outil complet déterminées en tant que données, et/ou que le système de chauffage comporte au moins un élément de bobine (55) comportant une bobine d'induction, en particulier pouvant être placé sur un porte-outil (5) et/ou annulaire, destiné à chauffer un mandrin de rétraction (79) d'un porte-outil (5).

7. Dispositif selon l'une des revendications précédentes, **caractérisé en ce qu'**au moins un pot de refroidissement (77), en particulier refroidi par un fluide de refroidissement, est prévu pour refroidir un outil complet (3), un outil complet (3) pouvant être disposé, en particulier avec une orientation à l'envers, en partie ou en totalité dans un espace intérieur du pot de refroidissement (77) et pouvant être amené, en particulier par une section (79) de mandrin de rétraction d'un porte-outil (5) de l'outil complet (3), en appui avec une paroi intérieure (81) refroidie du pot de refroidissement (77).

8. Dispositif selon l'une des revendications précédentes, **caractérisé en ce qu'**un système de déplacement (11) pouvant être piloté est prévu en particulier avec un bras de robot pouvant être piloté, pour recevoir et déplacer un objet, le système de déplacement (11) comportant un préhenseur (13) destiné à recevoir un porte-outil (5) en tant qu'objet, en particulier sur une rainure de préhension (27) du porte-outil (5), ce qui permet de saisir et/ou de recevoir également un outil (7), en particulier en forme de tige, en tant qu'objet au moyen du préhenseur (13).

9. Dispositif selon la revendication 8, **caractérisé en ce que** le préhenseur (13) est réalisé en plusieurs parties, une première et une deuxième parties (15, 17) du préhenseur (13) comportant chacune un contour de préhension (19) de porte-outil, en particulier arqué, destiné à recevoir un porte-outil (5) et un contour de préhension (21) d'outil destiné à recevoir un outil (7), les parties (15, 17) de préhenseur étant maintenues sur un actionneur (23) pouvant être piloté du préhenseur (13), au moyen duquel un écartement des parties (15, 17) de préhenseur peut être ajusté, un porte-outil (5) et/ou un outil (7) pouvant être serrés par réduction de l'écartement des parties (15, 17) de préhenseur.

10. Dispositif selon la revendication 9, **caractérisé en ce que** le contour de préhension (19) de porte-outil et le contour de préhension (21) d'outil de la partie respective (15, 17) de préhenseur sont disposés à distance l'un de l'autre et/ou que la première et la deuxième partie (15, 17) de préhenseur sont réalisées symétriquement en miroir l'une par rapport à l'autre et/ou sont formées par des composants identiques (39, 41).

11. Dispositif selon l'une des revendications 8 à 10, **caractérisé en ce que** le système de déplacement, en particulier le préhenseur du système de déplacement, comporte un capteur, en particulier un capteur à ultrasons, pour détecter des porte-outils et/ou des outils complets se trouvant dans une zone proche définie dans la zone du préhenseur.

12. Installation pour la mise à disposition, en particulier automatisée, d'un outil complet (3) composé d'un porte-outil (5) et d'un outil (7), en particulier d'un outil de perçage et/ou de fraisage, avec un dispositif selon l'une des revendications précédentes, le fait qu'un poste d'équilibrage (83) destiné à contrôler la qualité d'équilibrage d'un outil complet (3) et/ou destiné à équilibrer un outil complet (3) étant prévu.

13. Installation selon la revendication 12, **caractérisée en ce que** la station d'équilibrage, en particulier tous les systèmes de l'installation pouvant être pivotés, sont interconnectés entre eux par transmission de données et/ou de signaux par un ordinateur maître et/ou que les dimensions d'outil complet déterminées au moyen du système de mesure peuvent être mémorisées sous forme de données sur une puce RFID d'un outil complet mesuré et/ou transmises à un réseau de données central.

14. Procédé pour faire fonctionner une installation selon la revendication 12 ou 13.
